# EUROPEAN PATENT SPECIFICATION

(11) **EP 4 059 741 B1**
(45) Date of publication and mention of the grant of the patent: **26.03.2025**
(21) Application number: 22171952.9
(22) Date of filing: 25.06.2021
(51) Int. Cl.: B60C 15/00, B60C 15/04, B60C 15/06, B60C 1/00

(54) **PNEUMATIC TIRE**
LUFTREIFEN
PNEUMATIQUE

(30) Priority: 06.07.2020 JP 2020116567
(43) Date of publication of application: 21.09.2022
(62) Divisional of application: 21181730.9
(73) Proprietor: Sumitomo Rubber Industries, Ltd., Kobe-shi, Hyogo-ken 651-0072 (JP)
(72) Inventor: SUZUKI, Naoya, Kobe-shi, Hyogo, 651-0072 (JP); YAO, Masahiro, Kobe-shi, Hyogo, 651-0072 (JP)
(74) Representative: Manitz Finsterwald Patent- und Rechtsanwaltspartnerschaft mbB

(56) References cited:
- EP-A2- 1 486 355
- EP-B1- 0 422 605
- JP-A- 2001 130 230
- JP-B2- 6 607 046
- US-A1- 2019 168 548
- US-A1- 2020 016 934

## Description

### [Technical Field]

The present invention relates to a pneumatic tire.

### [Background Art]

The following Patent Document 1 has described a pneumatic tire having bead portions each in which an annular bead core extending in a tire circumferential direction is arranged. Each of the bead portions is provided with a chafer that covers a part of the inner surface of the tire. This chafer is formed of a cloth and a rubber impregnated in the cloth. Further prior art pneumatic tires are disclosed in the following documents EP 0 422 605 B1, EP 1 486 355 A2, JP 6 607 046 B2 and US 2020 / 016 934 A1.

In particular, EP 0 422 605 B1 discloses a pneumatic tire for a passenger car. The tire comprises a rubber chafer (5) disposed around a bead portion (1) which is composed of a soft rubber layer (5S) on an outer layer side and a hard rubber layer (5H) on an inner layer side. The rubber chafer (5) is disposed around the bead core (2) so as to extend from inside said tire to the external sidewall portion through a bead base.

EP 1 486 355 A2 discloses a pneumatic tire for an earthmover vehicle, wherein the tire comprises lower gum chafers (40, 41) and upper gum chafers (44, 45) disposed against the lower gum chafers (40, 41).

JP 2001 130 230 A discloses a pneumatic tire in which the body ply of which an edge-part side engages with the bead wires is provided in the tire inner surface side while the bead wires are embed/buried under the bead part.

US 2019 / 168 548 A1 discloses a pneumatic tire having bead cores, in particular a pneumatic tire having a pair of bead portions each having a bead core therein.

### [Prior Art Document]

### [Patent Document]

[Patent Document 1]
Japanese Patent No. 6334932

### [Summary of the Invention]

### [Problems to be solved by the Invention]

The above pneumatic tire has a high bending rigidity at the bead portions due to the improved reinforcing effect of the cloth in the chafers. When the tire is removed from a wheel rim, the bead portions configured as such cannot smoothly get over the rim flange, therefore, it is possible that the chafers come into strong contact with the rim flange, causing separation of the chafers, for example.

The present invention was made in view of the above, and a primary object thereof is to provide a pneumatic tire capable of suppressing damage to the bead portions when removed from rims.

### [Means for Solving the Problems]

The present invention is a pneumatic tire including a pair of bead portions, wherein each bead portion of the pair of the bead portions comprising a bead core, and a chafer rubber arranged axially inside the bead core and extending outward in a tire radial direction from a bead toe along a tire inner cavity surface, and the chafer rubber is formed of a rubber composition not containing fiber material for reinforcement, wherein the second bead width Wb is 18.0 mm or less, wherein the second bead width (Wb) is a width in the tire axial direction from the bead toe to an axially outer side surface of said each bead portion, wherein the pneumatic tire further comprises a carcass ply extending between the pair of the bead portions, and wherein a shortest distance (D2) between the bead toe and the carcass ply is 6.0 mm or less.

In the pneumatic tire according to the present invention, in a tire meridian section passing through a tire rotational axis, a ratio Wa/Wb of a first bead width (Wa) and a second bead width (Wb) may be from 0.8 to 1.3, the first bead width (Wa) may be a bead width defined on a tire axial direction line passing through a cross-sectional center of the bead core, and the second bead width (Wb) may be a width in the tire axial direction from the bead toe to an axially outer side surface of said each bead portion.

In the pneumatic tire according to the present invention, the ratio Wa/Wb may be larger than 1.0.

In the pneumatic tire according to the present invention, the second bead width (Wb) may be 17.0 mm or less.

In the pneumatic tire according to the present invention, each bead portion of the pair of the bead portions may have a bead bottom surface to be in contact with a rim seat of a rim, when the pneumatic tire is mounted on the rim, on a radially inner side of the bead core of said each bead portion, said bead core may have a bead core inner surface facing toward the rim seat when the pneumatic tire is mounted on the rim, and a shortest distance between a center position in the tire axial direction of the bead core inner surface and the bead bottom surface may be 3.5 mm or more.

In the pneumatic tire according to the present invention, the chafer rubber may have a breaking elongation of 260% or less.

In the pneumatic tire according to the present invention, the chafer rubber may have a complex elastic modulus E* of 12 MPa or less.

In the pneumatic tire according to the present invention, in a tire meridian section passing through a tire rotational axis and in each of the bead portions, in a portion of the tire inner cavity surface formed by the chafer rubber, a contour between an intersection point and the bead toe may be formed in an arc shape, and the intersection point may be where the tire inner cavity surface intersects with an axial linear line passing through a cross-sectional center of the bead core of said each of the bead portions.

In the pneumatic tire according to the present invention, the chafer rubber may include a first portion extending radially outward along the tire inner cavity surface, a second portion forming at least a part of a bead bottom surface to be in contact with a rim seat of a rim when the pneumatic tire is mounted on the rim, and a third portion extending radially outward and arranged axially outside the bead core of said each bead portion.

The pneumatic tire according to the present invention may be a light truck tire.

### [Effects of the Invention]

In the pneumatic tire of the present invention, by adopting the above configurations, damage to the bead portions when the pneumatic tire is removed from the rim can be suppressed.

### [Brief Description of the Drawings]

[Figure 1] a tire meridian section showing an example of the pneumatic tire.
[Figure 2] an enlarged view of a bead portion of Figure 1.
[Figure 3A] a cross-sectional view showing an example of the state of the tire being removed from a wheel rim.
[Figure 3B] a cross-sectional view showing an example of the state of the tire being removed from the wheel rim.

### [Mode for carrying out the invention]

An embodiment of the present invention will now be described in conjunction with accompanying drawings. It must be understood that the drawings may contain exaggerations and representations that differ from the dimensional ratios of the actual structure in order to aid in the understanding of the content of the invention. Further, throughout each embodiment, identical or common elements are designated by the same reference numerals, and duplicate explanations are omitted. Furthermore, the embodiments and the specific configuration represented in the drawings are for the purpose of understanding the content of the present invention, and the present invention is not limited to the specific configuration shown in the figures but is defined by the appended claims.

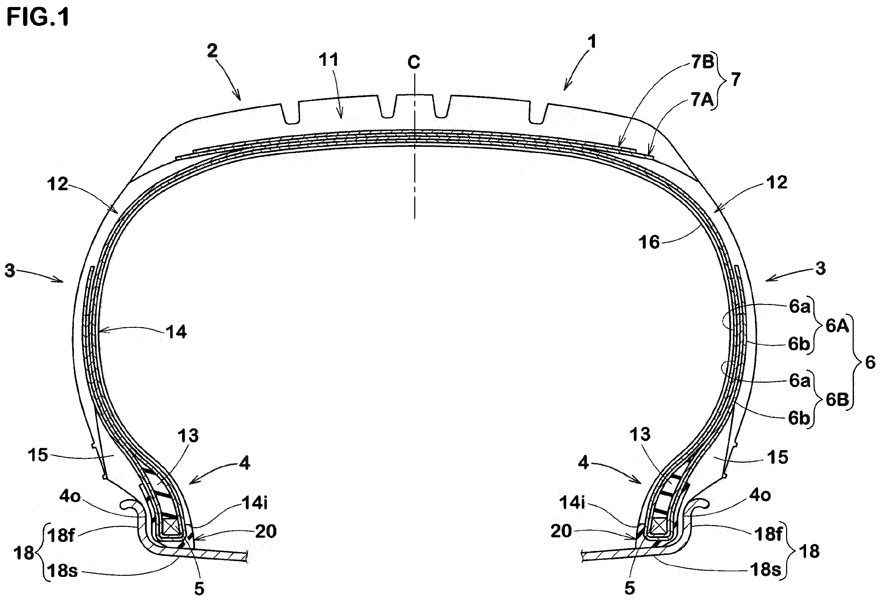

Figure 1 shows an example of a tire meridian section passing through a tire rotational axis in a standard state of a pneumatic tire (hereinafter may be simply referred to as "tire"). In Figure 1, the alternate long and short dash line represents a tire equator (equator plane) (C). The tire 1 of the present embodiment is configured for light trucks. It should be noted that the tire 1 is not specific to light trucks, but may be configured as a tire for passenger cars or as a heavy-duty tire for buses, trucks, and the like, for example.

Here, the term "standard state" refers to the state in which the tire 1 is mounted on a standard rim (hereinafter may be simply referred to as "rim") 18, inflated to a standard inner pressure, and loaded with no tire load. In the present specification, unless otherwise noted, dimensions and the like of various parts of the tire 1 are values measured in this standard state.

The "standard rim" is a wheel rim specified for the concerned tire by a standard included in a standardization system on which the tire is based. The standard rim is, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based. The standard inner pressure is, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The tire 1 of the present embodiment is provided with a tread portion 2, a pair of sidewall portions 3, and a pair of bead portions 4. Further, the tire 1 of the present embodiment has a carcass 6 extending between bead cores 5 of the pair of the bead portions 4 via the tread portion 2 and the pair of the sidewall portions 3, and a belt layer 7 arranged radially outside the carcass 6.

The carcass 6 is formed of at least one carcass ply, and in the present embodiment two carcass plies 6A and 6B arranged adjacently in the tire radial direction. Each of the carcass plies 6A and 6B has carcass cords (not shown) arranged at an angle of 75 to 90 degrees with respect to the tire equator (C), for example. For example, organic fiber cords such as nylon, polyester, rayon, and the like are suitably used as the carcass cords.

Each of the carcass plies 6A and 6B extends between the pair of the bead portions 4. Each of the carcass plies 6A and 6B includes a main body portion (6a) extending between the pair of the bead cores 5 in a toroidal manner, and a pair of turned up portions (6b) connected to both sides, one at each side, of the main body portion (6a) and each turned up around a respective one of the bead cores 5 from an inside to an outside in a tire axial direction.

The belt layer 7 is arranged inside the tread portion 2 and radially outside the carcass 6. The belt layer 7 is formed of at least one belt ply, in the present embodiment, two belt plies 7A and 7B arranged adjacently in the tire radial direction. Each of the belt plies 7A and 7B is formed by an array of belt cords, not shown in the figures, coated with a topping rubber, for example. It is preferred that the belt cords are of high elasticity such as steel cords and the like.

The tire 1 of the present embodiment is provided with a tread rubber 11, a pair of sidewall rubbers 12, a pair of bead apex rubbers 13, an inner liner rubber 14, and a pair of clinch rubbers 15.

The tread rubber 11 is arranged radially outside the belt layer 7 in the tread portion 2. Each of the sidewall rubbers 12 is arranged axially outside the carcass 6 and extends radially inward from a respective one of outer ends in the tire axial direction of the tread rubber 11. Each of the bead apex rubbers 13 is formed of hard rubber and extends radially outward from a respective one of the bead cores 5 between the main body portions (6a) and respective ones of the turned up portions (6b) of the carcass plies 6A and 6B.

The inner liner rubber 14 is air impermeable and is arranged radially inside the carcass 6. The inner liner rubber 14 of the present embodiment extends toroidally between a pair of the bead portions 4. The inner liner rubber 14 configured as such, together with the chafer rubber 20 described below, forms a tire inner cavity surface 16.

The pair of the clinch rubbers 15 are arranged axially outside the carcass 6, one on each axial side, and each extend radially inward from a radially inner end of a respective one of the sidewall rubbers 12. These clinch rubbers 15 forms at least a part of a bead outer surface (4o) which is to be in contact with a rim flange (18f) of a rim 18 when the tire 1 is mounted on the rim (wheel rim) 18.

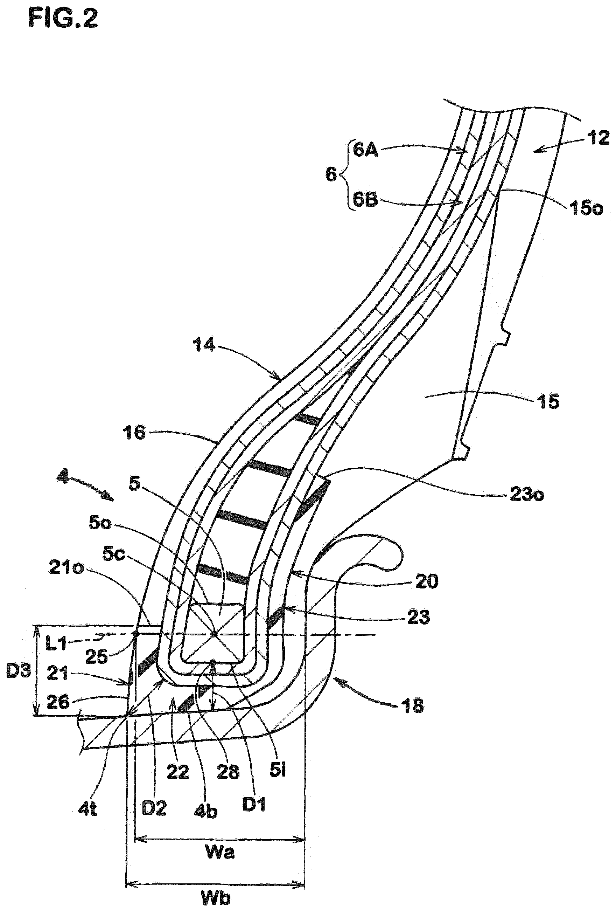

Figure 2 is an enlarged view of one of the bead portions 4 shown in Figure 1. In Figure 2, one of the bead portions 4 (right side in Figure 1) of the pair of the bead portions 4 shown in Figure 1 is shown enlarged. Each bead portion of the pair of the bead portions 4 has the bead core 5 and the chafer rubber 20.

The bead cores are each formed in a rectangular (trapezoidal) shape in a tire meridian section passing through the tire rotational axis (hereinafter referred to simply as the "tire meridian section"). Each of the bead cores 5 of the present embodiment has a bead core inner surface (5i) which faces toward a rim seat (18s) when the tire 1 is mounted on the rim 18 and a bead core outer surface (5o) located on an outer side in the tire radial direction. It should be noted that the shape of the bead cores is not limited to such an embodiment, but can be configured as hexagonal or circular, for example. The bead cores are formed by winding steel bead wires (not shown) in multiple rows and multiple stages, for example.

The chafer rubber 20 is formed of a rubber composition that does not contain fiber material for reinforcement. Examples of the fiber material are the cloth (e.g., canvas cloth made of organic fibers and the like) that forms the chafer in Patent Document 1 above, for example. This type of fiber material (cloth) has low elasticity and high reinforcing effect. Therefore, the chafer rubber 20 of the present embodiment can prevent the rigidity of the bead portions 4 from being higher than necessary compared to chafers containing fiber material.

The rubber composition of the chafer rubber 20 can be set accordingly. The rubber composition of the present embodiment is configured to include a polymer and compounding agents, and a composition having excellent wear resistance is employed.

For the polymer and the compounding agents, those commonly used in the manufacture of rubber materials can be employed. The polymer can be selected from natural rubber (NR), butadiene rubber (BR), or styrene-butadiene rubber (SBR), and the like, for example. The compounding agents are selected from fillers such as carbon and silica, oils, processing aids, sulfur, or vulcanization accelerators, for example. The unvulcanized rubber composition containing these polymers and compounding agents is vulcanized to form the chafer rubber 20. It should be noted that formulations of these agents and materials can be adjusted according to the conventional procedures for manufacturing rubber materials so that the chafer rubber 20 has the physical properties described below (breaking elongation EB and complex elastic modulus E*).

The chafer rubber 20 of the present embodiment is configured to include a first portion 21 extending radially outward along the tire inner cavity surface 16. The first portion 21 is arranged axially inside each of the bead cores 5 and extends radially outward from a bead toe (4t) of the respective bead portion 4 along the tire inner cavity surface 16.

The first portion 21 has an outer end (21o) in the tire radial direction connected to an inner end (14i) (shown in Figure 1) in the tire radial direction of the inner liner rubber 14. Thereby, the first portion 21 together with the inner liner rubber 14 can continuously form the tire inner cavity surface 16.

The chafer rubber 20 of the present embodiment further includes a second portion 22 and a third portion 23. It should be noted that the chafer rubber 20 is not limited to such an embodiment.

The second portion 22 in the present embodiment extends radially outward from a radially inner end (bead toe (4t)) of the first portion 21. The second portion 22 has an axially outer end connected to a radially inner end side of the clinch rubber 15. The second portion 22 configured as such forms at least a part of a bead bottom surface (4b) which is to be in contact with the rim seat (18s) (shown in Figure 1) of the rim (wheel rim) 18 on a radially inner side of the bead core 5 (including the carcass plies 6A and 6B).

The third portion 23 of the present embodiment is arranged axially outside the bead core 5 and extends radially outward. The third portion 23 of the present embodiment is arranged axially inside the clinch rubber 15. The third portion 23 has a radially inner end connected to an axially outer end of the second portion 22. The third portion 23 has an outer end (23o) of the in the tire radial direction arranged radially outside the outer end (outermost end) (5o) of the bead core 5. Further, the outer end (23o) of the third portion 23 is arranged radially inside an outer end (15o) of the clinch rubber 15. Therefore, the outer end (23o) of the third portion 23 is displaced in the tire radial direction with the bead core outer surface (5o) and the outer end (15o) of the clinch rubber 15. Thereby, bending rigidity of the bead portions 4 can be prevented from becoming too large.

In the chafer rubber 20 of the present embodiment, the first portion 21, the second portion 22, and the third portion 23 are arranged in succession. As a result, the chafer rubber 20 is formed in a substantially U-shape (or J-shape) in the tire meridian section. The chafer rubbers 20 configured as such protect the bead portions 4 (preventing friction damage with the rim 18) and can effectively prevent rim displacement.

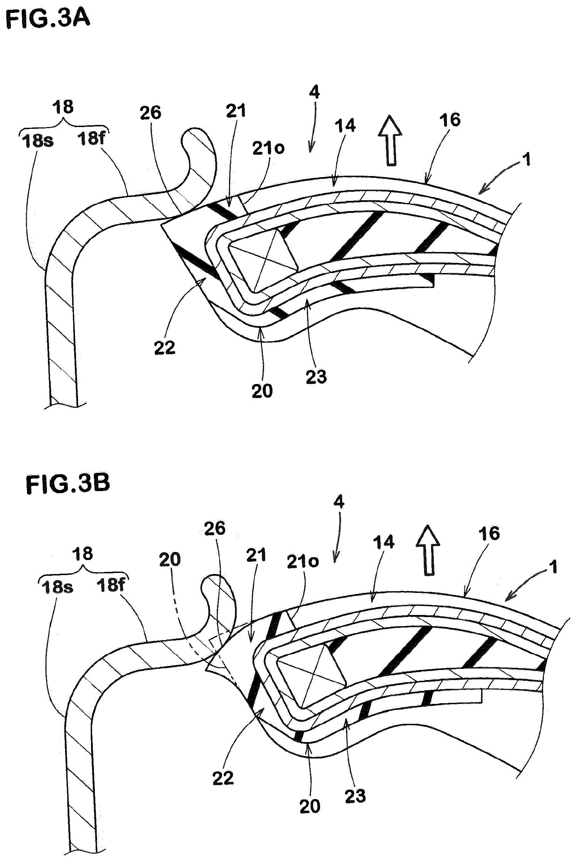

Figures 3A and 3B are cross-sectional views showing an example of the state in which the tire 1 is removed from the wheel rim (rim) 18. In Figures 3A and 3B, one of the bead portions 4 (left side in Figure 1) has already been removed from one of the rim flanges (18f) (left side in Figure 1), and the other bead portion 4 (right side in Figure 1) is getting over the one of the rim flanges (18f) (left side in Figure 1).

As shown in Figure 3A, when the tire 1 is removed from the wheel rim (rim) 18, the tire inner cavity surface 16 of the bead portion 4, which is formed of the chafer rubber 20 (first portion 21), comes into contact with (and gets caught by) the rim flange (18f) on the rim flange (18f). For this reason, the bead portion 4 need to be deformed to get over the rim flange (18f). At this time, for example, in the case of a chafer containing a fiber material (not shown) such as the one disclosed in Patent Document 1 above, if it comes into strong contact with the rim flange (18f), the fibers that make up the fiber material may break off, therefore, the bead portion 4 may be damaged. In particular, the chafer rubber 20 tends to contact the rim flange (18f) more strongly in light truck tires, in which the tightening force on the rim 18 is greater.

In the present embodiment, the chafer rubbers 20 that contact the rim flange (18f) are formed of a rubber composition that does not contain fiber material for reinforcement. Therefore, as shown in Figure 3B, the chafer rubbers 20 can be deformed more flexibly than the chafer containing fiber material (not shown) as disclosed in Patent Document 1 above. Therefore, in the case of the tire 1 of the present embodiment, it is possible that the bead portions 4 smoothly get over the rim flange (18f), thereby, the chafer rubber 20 can be prevented from coming into strong contact with the rim flange (18f). As a result, in the tire 1 of the present embodiment, damage to the bead portions 4 when removed from the rim 18 can be suppressed.

In the tire meridian section shown in Figure 2, it is preferred that a contour 26 of the tire inner cavity surface 16 between an intersection point 25 and the bead toe (4t) is formed in an arc shape. The intersection point 25 is where the tire inner cavity surface 16 intersects with a linear line (L1) extending in the tire axial direction and passing through a cross-sectional center (5c) of the bead core 5. Thereby, as shown in Figures 3A and 3B, the contact area between the contour 26 of the chafer rubber 20 (first portion 21) and the rim flange (18f) when removing the tire 1 from the rim 18 is decreased. Therefore, separation of the chafer rubber 20 caused by coming into strong contact with the rim flange (18f) can be prevented. In order to effectively exert such an effect, it is preferred that the contour 26 is formed in an arc shape that is convex axially inward.

As shown in Figure 2, it is preferred that the outer end (21o) of the first portion 21 is arranged between the bead core outer surface (5o) and the bead core inner surface (5i) of the bead cores 5 in the tire radial direction. Therefore, deformation at the boundary (near the outer end (21o)) between the first portion 21 and the inner liner rubber 14 can be suppressed by the bead core 5 having high rigidity and arranged axially outside the boundary. Thereby, as shown in Figs. 3A and 3B, rubber breakage in the first portion 21 (chafer rubber 20) when the tire 1 is removed from the rim 18 can be prevented, therefore, damage to the bead portions 4 can be suppressed. It should be noted that, in order to prevent such rubber breakage, it is preferred that a shortest distance (D3) in the tire radial direction between the outer end (21o) of the first portion 21 and the bead toe (4t) is set to 10 mm or more. On the other hand, it is preferred that the shortest distance (D3) is set to 40 mm or less. By setting the shortest distance (D3) to 40mm or less, it is possible that the distortion of the first portion 21 is prevented from being large when being loaded, therefore, separation can be prevented between the first portion 21 (chafer rubber 20) and the inner liner rubber 14 (at the outer end (21o)).

As shown in Figure 2, in the tire meridian section passing through the tire rotational axis, it is preferred that a ratio Wa/Wb of a first bead width (Wa) and a second bead width (Wb) is set between 0.8 and 1.3. It should be noted that the first bead width (Wa) is the bead width defined on the tire axial direction line (in the present embodiment, on the linear line (L1)) passing through the cross-sectional center (5c) of the bead core 5. On the other hand, the second bead width (Wb) is the width (bead base width) in the tire axial direction from the bead toe (4t) to the axially outer side surface of the bead portion 4 (bead outer surface (4o) shown in Figure 1).

By setting the ratio Wa/Wb to 0.8 or more, with respect to the first bead width (Wa) positioned on the bead cores 5 side, it is possible to prevent the second bead width (Wb) on the bead toe (4t) side, which tends to contact the rim flange (18f), from becoming larger than necessary. Therefore, the bead portions 4 on the bead toe (4t) side can be prevented from coming into strong contact with the rim flange (18f) when the tire 1 is removed from the wheel rim (rim) 18, thereby, the chafer rubber 20 can be prevented from separation. In addition, it is possible that a rubber thickness on the bead cores 5 side of the bead portion 4 is prevented from decreasing, thereby, insufficient rubber (molding defects) in that area during vulcanization molding can be prevented. From such a point of view, it is preferred that the ratio Wa/Wb is preferably set to 1.0 or more, and even more preferably to greater than 1.0.

On the other hand, by setting the ratio Wa/Wb to 1.3 or less, with respect to the second bead width (Wb) on the bead toe (4t) side, the first bead width (Wa) on the bead cores 5 side can be prevented from becoming larger than necessary. Thereby, since the rubber thickness of the bead portion 4 on the bead core 5 side can be prevented from becoming unnecessarily large, excessive rubber (molding defects) can be prevented from occurring in that area during vulcanization molding. From such a point of view, it is preferred that the ratio Wa/Wb should preferably be set to 1.2 or less.

The second bead width (Wb) is set to 18.0 mm or less. By setting the second bead width (Wb) to 18.0 mm or less, the bending rigidity of bead portions 4 can be prevented from becoming large. Thereby, the bead portions 4 can smoothly get over the rim flange (18f), as shown in Figure 3B. From such a point of view, the second bead width (Wb) should preferably be set to 17.0 mm or less. On the other hand, if the second bead width (Wb) is smaller than necessary, it becomes difficult to maintain the effect of preventing rim displacement. For this reason, the second bead width (Wb) should preferably be set to 15 mm or more.

As shown in Figure 2, it is preferred that a shortest distance (D1) between a center position 28 in the tire axial direction of the bead core inner surface (5i) and a bead bottom surface (4b) is set to 3.5 mm or more. By setting the shortest distance (D1) to 3.5 mm or more, the bead core inner surface (5i) can be separated from the bead bottom surface (4b) in the tire radial direction. Therefore, when the bead portions 4 are mounted on the rim 18, the bead portions 4 are prevented from tightening and contacting the rim 18 (the rim seat (18s) and the rim flange (18f) shown in Figure 1) more strongly than necessary. Furthermore, the chafer rubber 20 can be prevented from coming into strong contact with the rim flange (18f). Therefore, the bead portions 4 can be easily removed from the wheel rim (rim) 18, and also the separation of the chafer rubber 20 can be effectively prevented. From such a point of view, it is preferred that the shortest distance (D1) is set to 4.0 mm or more.

On the other hand, if the shortest distance (D1) becomes larger than necessary, the tightening force of the bead portions 4 to the rim 18 becomes smaller, therefore, the rim displacement, rim dislodgement, and the like are more likely to occur. From such a point of view, it is preferred that the shortest distance (D1) is set to 5.5 mm or less.

According to the present invention, a shortest distance (D2) between the bead toe (4t) and the carcass plies 6A and 6B (in the present embodiment, the inner carcass ply 6A) is set to 6.0 mm or less. By setting the shortest distance (D2) to 6.0 mm or less, when the tire 1 is removed from the wheel rim (rim) 18 (shown in Figures 3A and 3B), the contact area (interference amount) of the rim flange (18f) with the bead toe (4t) of the bead portion 4 can be reduced. Thereby, this allows the bead portions 4 to smoothly get over the rim flange (18f) (as shown in Figure 3B), therefore, damage to the bead portions 4 can be prevented. From such a point of view, it is preferred that the shortest distance (D2) is set to 5.5 mm or less.

On the other hand, if the shortest distance (D2) becomes smaller than necessary, the rim displacement, the rim dislodgement, and the like are likely to occur. From such a point of view, it is preferred that the shortest distance (D2) is set to 4.0 mm or more.

It is preferred that the breaking elongation EB of the chafer rubber 20 is set to 260% or less. By setting the breaking elongation EB to 260% or less, the chafer rubber 20 (the first portion 21) can be suppressed from being greatly stretched by the contact with the rim flange (18f) as shown in Figure 3B, therefore, separation of the chafer rubber can be prevented. From such a point of view, it is preferred that the breaking elongation EB is preferably set to 250% or less.

On the other hand, if the breaking elongation EB of the chafer rubber 20 is smaller than necessary, the tightening force of the bead portions 4 onto the rim 18 becomes smaller, the rim displacement, the rim dislodgement, and the like are more likely to occur. From such a point of view, it is preferred that the breaking elongation EB is set to 220% or more. In the present specification, the breaking elongation can be measured in accordance with "Vulcanized and thermoplastic rubbers - Determination of tensile properties -" in Japanese Industrial Standard JIS K6251, for example.

It is preferred that the complex elastic modulus E* of the chafer rubber 20 is set to 12 MPa or less. By setting the complex elastic modulus E* to 12 MPa or less, the bead portions 4 mounted on the rim 18 can be prevented from tightening and being in strong contact with the rim 18 (the rim seat (18s) and the rim flange (18f) shown in Figure 1). Therefore, this allows the bead portions 4 to be easily removed from the wheel rim (the rim) 18, thereby, separation of the chafer rubber 20 can be prevented. From such a point of view, it is preferred that the complex elastic modulus E* is preferably set 10 MPa or less.

On the other hand, if the complex elastic modulus E* of the chafer rubber 20 is smaller than necessary, the tightening force of the bead portions 4 on the rim 18 becomes smaller, therefore, the rim displacement, the rim dislodgement, and the like are more likely to occur. From such a point of view, it is preferred that the complex elastic modulus E* is preferably set to 8 MPa or more.

In the present specification, the complex elastic modulus E* is a value measured by using a viscoelastic spectrometer available from Iwamoto Quartz GlassLab Co., Ltd. under the following conditions in accordance with the provisions of JIS-K6394.
initial strain: 10%
amplitude: ±2
frequency: 10Hz
deformation mode: tensile
measurement temperature: 70 degrees Celsius

While detailed description has been made of the tire according to an especially preferred embodiment of the present invention, the present invention can be embodied in various forms without being limited to the illustrated specific embodiment.

### [Examples]

### [Examples A]

In the following, more specific and non-limiting examples of the present invention will be described.

Pneumatic tires having the basic structure shown in Figure 1 and having the chafer rubber not including the fiber material for reinforcement were made by way of test (Examples 1 to 5). For comparison, pneumatic tires having the chafer including the fiber material for reinforcement were made by way of test (Reference). For each of the test pneumatic tires, damage resistance of the bead portions when removed from the mounted rim, the number of vulcanization molding defects, and the tightening force to the rim were evaluated. The common specifications were as follows.
Tire size: 195/75R15 109/107N
Rim size: 15x5.5J
Second bead width (Wb): 17.0 mm
Shortest distance (D1) between Center position of Bead core inner surface and Bead bottom surface: 4.0 mm
Shortest distance (D2) between Bead toe and Carcass ply: 5.5 mm
Chafer rubber:
   Breaking elongation EB: 250%
   Complex elastic modulus E*: 10.1 MPa

The test methods were as follows.

### < Damage Resistance of Bead Portion >

Each of the test pneumatic tires mounted on the rim was removed from the rim by using a mechanical tire changer. Then, the size of the separation of the chaffer rubber (chaffer) was visually checked and evaluated by a five point method. A score of 1 indicates a large amount of the separation. A score of 5 indicates no separation at all. Therefore, the higher the score, the better the result is, and a score of 2 or higher indicates that there is no problem with the damage resistance of the bead portions.

### < Number of Vulcanization Molding Defects >

One thousand units of each of the test pneumatic tires were made, and the number of the pneumatic tires having molding defects such as insufficient or excessive rubber in the bead portions was counted. The smaller the number of the molding defects, the better the result is. It should be noted that if the number is 10 or less, it is within the acceptable range.

### < Tightening Force to Rim >

By using a bead-tightening force measuring machine (available from Hofmann Maschinen- und Anlagenbau GmbH: model number WKM-B4), the bead portions of the test pneumatic tires were each expanded in eight segments, and the tightening force (expansion force) was measured when the segments were expanded to the standard value of the rim described above. The results are indicated by an index based on the tightening force of Example 3 being 100, wherein the larger the index, the larger the tightening force is. It should be noted that if the index is 80 or more, the rim displacement, the rim dislodgement, and the like are considered to be less likely to occur. On the other hand, in order to effectively prevent the separation of the chafer rubber, it is preferred that the index is 120 or less.

The test results are shown in Table 1.

**Table 1**

| | | Reference | Example 1 | Example 2 | Example 3 | Example 4 | Example 5 |
|---|---|---|---|---|---|---|---|
| Presence or Absence of Fiber material for reinforcement | | Presence | Absence | Absence | Absence | Absence | Absence |
| Ratio Wa/Wb of First bead width (Wa) and Second bead width (Wb) | | 1.1 | 0.7 | 0.8 | 1.1 | 1.3 | 1.5 |
| Damage resistance of Bead portion | [5-point method] | 1 | 2 | 3 | 5 | 5 | 4 |
| Number of Vulcanization molding defects | [tire unit] | 1 | 4 | 1 | 0 | 0 | 6 |
| Tightening force to Rim | [index] | 100 | 120 | 110 | 100 | 90 | 80 |

From the results of the test, it was confirmed that the tires in the Examples 1 to 5 were able to suppress damage to the bead portions when removed from the rim, compared to the tires in the Reference. Further, the tires in the Examples 2 to 4, each in which the ratio Wa/Wb between the first bead width (Wa) and the second bead width (Wb) was within the preferred range, were able to suppress the occurrence of vulcanization-induced molding defects (excessive rubber and insufficient rubber) compared to the tires in the Examples 1 and 5, in which the ratio Wa/Wb was not within the preferred range. Furthermore, the tires in the Examples 2 to 4 were able to optimize the tightening force to the rim and effectively suppress the damage to the bead portions, the rim displacement, and the rim dislodgement.

### [Examples B]

Pneumatic tires having the basic structure shown in Figure 1 and having the chafer rubber not including the fiber material for reinforcement were made by way of test (Examples 3 and 6 to 9). For each of the test pneumatic tires, the damage resistance of the bead portions when removed from the mounted rim, the number of the vulcanization molding defects, and the tightening force to the rim were evaluated. The common specifications were the same as those in the Examples A (except for the second bead width (Wb)), except for the item shown below. Further, the test methods were same as described above for the Examples A. The test results are shown in Table 2.

Ratio Wa/Wb of First bead width (Wa) and Second bead width (Wb): 1.1

**Table 2**

| | | Example 6 | Example 7 | Example 3 | Example 8 | Example 9 |
|---|---|---|---|---|---|---|
| Second bead width (Wb) | [mm] | 20 | 18 | 17 | 15 | 14 |
| Damage resistance of Bead portion | [5-point method] | 2 | 4 | 5 | 4 | 3 |
| Number of Vulcanization molding defects | [tire unit] | 2 | 0 | 0 | 1 | 4 |
| Tightening force to Rim | [index] | 120 | 105 | 100 | 95 | 80 |

From the results of the test, it was confirmed that the tires in the Examples 3 and 6 to 9 were able to suppress the damage to the bead portions when removed from the rim, compared to the tires in the Reference (shown in Table 1). Further, the tires in the Examples 3, 7 and 8, each in which the second bead width (Wb) was within the preferred range, were able to suppress the damage to the bead portions and the occurrence of the vulcanization molding defects (excessive rubber and insufficient rubber) compared to the tires in the Examples 6 and 9, each in which the ratio Wa/Wb was not within the preferred range. Furthermore, the tires in the Examples 3, 7, and 8 were able to optimize the tightening force to the rim and effectively suppress the damage to the bead portions, the rim displacement, and the rim dislodgement.

### [Examples C]

Pneumatic tires having the basic structure shown in Figure 1 and having the chafer rubber not including the fiber material for reinforcement were made by way of test (Examples 3 and 10 to 17). For each of the test pneumatic tires, the damage resistance of the bead portions when removed from the mounted rim, the number of the vulcanization molding defects, and the tightening force to the rim were evaluated. The common specifications were the same as those in the Examples A (except for the shortest distance (D1) between the center position of the bead core inner surface and the bead bottom surface and the shortest distance (D2) between the bead toe and the carcass plies), except for the item shown below. Further, the test methods were same as described above for the Examples A. The test results are shown in Table 3.

Ratio Wa/Wb of First bead width (Wa) and Second bead width (Wb): 1.1

**Table 3**

| | | Ex. 10 | Ex. 11 | Ex. 3 | Ex. 12 | Ex. 13 | Ex. 14 | Ex. 15 | Ex. 16 | Ex. 17 |
|---|---|---|---|---|---|---|---|---|---|---|
| Shortest distance (D1) between Center position of Bead core inner surface and Bead bottom surface | [mm] | 2.5 | 3.5 | 4.0 | 5.5 | 6.0 | 4.0 | 4.0 | 4.0 | 4.0 |
| Shortest distance (D2) between Bead toe and Carcass ply | [mm] | 5.5 | 5.5 | 5.5 | 5.5 | 5.5 | 7.0 | 6.0 | 4.0 | 3.0 |
| Damage resistance of Bead portion | [5-point method] | 5 | 5 | 5 | 4 | 3 | 2 | 4 | 5 | 5 |
| Number of Vulcanization molding defects | [tire unit] | 2 | 1 | 0 | 2 | 5 | 4 | 1 | 2 | 3 |
| Tightening force to Rim | [index] | 150 | 104 | 100 | 96 | 82 | 110 | 103 | 90 | 81 |

From the results of the test, it was confirmed that the tires in the Examples 3 and 10 to 17 were able to suppress the damage to the bead portions when removed from the rim, compared to the tires in the Reference (shown in Table 1). Further, the tires in the Examples 3, 11 to 12, and 15 to 16 each in which the shortest distances (D1) and (D2) were each within the preferred range, compared to the tires in the other Examples, were able to suppress the damage to the bead portions and the occurrence of the vulcanization molding defects (excessive rubber and insufficient rubber), thereby, they were able to optimize the tightening force to the rim.

### [Examples D]

Pneumatic tires having the basic structure shown in Figure 1 and having the chafer rubber not including the fiber material for reinforcement were made by way of test (Examples 3 and 18 to 25). For each of the test pneumatic tires, the damage resistance of the bead portions when removed from the mounted rim, the number of the vulcanization molding defects, and the tightening force to the rim were evaluated. The common specifications were the same as those in the Examples A (except for the breaking elongation EB and the complex elastic modulus E* of the chafer rubber), except for the item shown below. Further, the test methods were same as described above for the Examples A. The test results are shown in Table 4.

Ratio Wa/Wb of First bead width (Wa) and Second bead width (Wb): 1.1

**Table 4**

| | | Ex. 18 | Ex. 19 | Ex. 3 | Ex. 20 | Ex. 21 | Ex. 22 | Ex. 23 | Ex. 24 | Ex. 25 |
|---|---|---|---|---|---|---|---|---|---|---|
| Shortest distance (D1) between Center position of Bead core inner surface and Bead bottom surface | [mm] | 280 | 260 | 250 | 220 | 200 | 250 | 250 | 250 | 250 |
| Shortest distance (D2) between Bead toe and Carcass ply | [mm] | 10.1 | 10.1 | 10.1 | 10.1 | 10.1 | 14.0 | 12.0 | 8.0 | 6.0 |
| Damage resistance of Bead portion | [5-point method] | 2 | 4 | 5 | 5 | 5 | 2 | 4 | 5 | 5 |
| Number of Vulcanization molding defects | [tire unit] | 1 | 0 | 0 | 1 | 2 | 1 | 0 | 0 | 0 |
| Tightening force to Rim | [index] | 100 | 100 | 100 | 90 | 83 | 150 | 120 | 95 | 82 |

From the results of the test, it was confirmed that the tires in the Examples 3 and 18 to 25 were able to suppress the damage to the bead portions when removed from the rim, compared to the tires in the Reference (shown in Table 1). Further, the tires in the Examples 3, 19 to 20, and 23 to 24 each in which the breaking elongation EB and the complex elastic modulus E* were each within the preferred range, compared to the tires in the other Examples, were able to suppress the damage to the bead portions and optimize the tightening force to the rim.

### [Description of Reference Signs]

- 1: pneumatic tire
- 4: bead portion
- 5: bead core
- 16: tire inner cavity surface
- 20: chafer rubber

## Claims

1. A pneumatic tire (1) comprising a pair of bead portions (4),
wherein each bead portion (4) of the pair of the bead portions comprising a bead core (5), and a chafer rubber (20) arranged axially inside the bead core (5) and extending outward in a tire radial direction from a bead toe (4t) along a tire inner cavity surface (16), and
the chafer rubber (20) is formed of a rubber composition not containing fiber material for reinforcement,
wherein a second bead width Wb is 18.0 mm or less,
wherein the second bead width (Wb) is a width in the tire axial direction from the bead toe (4t) to an axially outer side surface of said each bead portion (4),
wherein the pneumatic tire further comprises a carcass ply (6A or 6B) extending between the pair of the bead portions (4),
**characterised in that** a shortest distance (D2) between the bead toe (4t) and the carcass ply (6A and 6B) is 6.0 mm or less.

2. The pneumatic tire according to claim 1, wherein
in a tire meridian section passing through a tire rotational axis,
a ratio Wa/Wb of a first bead width Wa and a second bead width Wb is from 0.8 to 1.3,
the first bead width Wa is a bead width defined on a tire axial direction line passing through a cross-sectional center of the bead core (5).

3. The pneumatic tire according to claim 2, wherein the ratio Wa/Wb is larger than 1.0.

4. The pneumatic tire according to claim 1, wherein the second bead width Wb is 17.0 mm or less.

5. The pneumatic tire according to any one of claims 1 to 4,
wherein each bead portion (4) of the pair of the bead portions has a bead bottom surface (4b) to be in contact with a rim seat (18s) of a rim (18), when the pneumatic tire (1) is mounted on the rim (18), on a radially inner side of the bead core (5) of said each bead portion (4),
said bead core (5) has a bead core inner surface (5i) facing toward the rim seat (18s) when the pneumatic tire (1) is mounted on the rim (18), and
a shortest distance between a center position in the tire axial direction of the bead core inner surface (5i) and the bead bottom surface (4b) is 3.5 mm or more.

6. The pneumatic tire according to any one of claims 1 to 5, wherein the chafer rubber (20) has a breaking elongation of 260% or less,
wherein the breaking elongation is measured in accordance with "Vulcanized and thermoplastic rubbers - Determination of tensile properties" in Japanese Industrial Standard JIS K6251.

7. The pneumatic tire according to any one of claims 1 to 6, wherein the chafer rubber (20) has a complex elastic modulus E* of 12 MPa or less,
wherein the complex elastic modulus E* is a value measured by using a viscoelastic spectrometer available from Iwamoto Quartz GlassLab Co., Ltd. under the following conditions in accordance with the provisions of JIS-K6394:
initial strain: 10%
amplitude: ±2
frequency: 10Hz
deformation mode: tensile
measurement temperature: 70 degrees Celsius.

8. The pneumatic tire according to any one of claims 1 to 7,
wherein, in a tire meridian section passing through a tire rotational axis and in each of the bead portions,
in a portion of the tire inner cavity surface (16) formed by the chafer rubber (20), a contour between an intersection point (25) and the bead toe (4t) is formed in an arc shape, and
the intersection point (25) is where the tire inner cavity surface (16) intersects with an axial linear line passing through a cross-sectional center of the bead core (5) of said each of the bead portions.

9. The pneumatic tire according to any one of claims 1 to 8,
wherein the chafer rubber (20) includes
a first portion (21) extending radially outward along the tire inner cavity surface (16),
a second portion (22) forming at least a part of a bead bottom surface (4b) to be in contact with a rim seat (18s) of a rim (18) when the pneumatic tire (1) is mounted on the rim (18), and
a third portion (23) extending radially outward and arranged axially outside the bead core (5) of said each bead portion.

10. The pneumatic tire according to any one of claims 1 to 9 being a light truck tire.

## Patentansprüche

1. Luftreifen (1), der ein Paar Wulstabschnitte (4) umfasst,
wobei jeder Wulstabschnitt (4) des Paares der Wulstabschnitte einen Wulstkern (5) und einen Wulstschutzgummi (20) umfasst, der axial innen von dem Wulstkern (5) angeordnet ist und sich in einer Reifenradialrichtung von einer Wulstspitze (4t) entlang einer Reifeninnenhohlraumfläche (16) nach außen erstreckt, und
der Wulstschutzgummi (20) aus einer Kautschukzusammensetzung gebildet ist, die kein Fasermaterial zur Verstärkung enthält,
wobei eine zweite Wulstbreite Wb 18,0 mm oder weniger beträgt,
wobei die zweite Wulstbreite (Wb) eine Breite in der Reifenaxialrichtung von der Wulstspitze (4t) zu einer axial äußeren Seitenfläche jedes Wulstabschnitts (4) ist,
wobei der Luftreifen ferner eine Karkasslage (6A oder 6B) umfasst, die sich zwischen dem Paar der Wulstabschnitte (4) erstreckt,
**dadurch gekennzeichnet, dass**
ein kürzester Abstand (D2) zwischen der Wulstspitze (4t) und der Karkasslage (6A und 6B) 6,0 mm oder weniger beträgt.

2. Luftreifen nach Anspruch 1, wobei
in einem Reifenmeridianschnitt, der durch eine Reifendrehachse verläuft,
ein Verhältnis Wa/Wb einer ersten Wulstbreite Wa und einer zweiten Wulstbreite Wb 0,8 bis 1,3 beträgt,
die erste Wulstbreite Wa eine Wulstbreite ist, die auf einer Reifenaxialrichtungslinie definiert ist, die durch eine Querschnittsmitte des Wulstkerns (5) verläuft.

3. Luftreifen nach Anspruch 2, wobei das Verhältnis Wa/Wb größer als 1,0 ist.

4. Luftreifen nach Anspruch 1, wobei die zweite Wulstbreite Wb 17,0 mm oder weniger beträgt.

5. Luftreifen nach einem der Ansprüche 1 bis 4,
wobei jeder Wulstabschnitt (4) des Paares der Wulstabschnitte eine Wulstbodenfläche (4b), um mit einem Felgensitz (18s) einer Felge (18) in Kontakt zu stehen, wenn der Luftreifen (1) auf die Felge (18) aufgezogen ist, auf einer radial inneren Seite des Wulstkerns (5) jedes Wulstabschnitts (4) aufweist,
der Wulstkern (5) eine Wulstkerninnenfläche (5i) aufweist, die dem Felgensitz (18s) zugewandt ist, wenn der Luftreifen (1) auf die Felge (18) aufgezogen ist, und
ein kürzester Abstand zwischen einer Mittelposition in der Reifenaxialrichtung der Wulstkerninnenfläche (5i) und der Wulstbodenfläche (4b) 3,5 mm oder mehr beträgt.

6. Luftreifen nach einem der Ansprüche 1 bis 5, wobei der Wulstschutzgummi (20) eine Bruchdehnung von 260 % oder weniger aufweist,
wobei die Bruchdehnung gemäß "Vulcanized and thermoplastic rubbers - Determination of tensile properties" in Japanese Industrial Standard JIS K6251 gemessen wird.

7. Luftreifen nach einem der Ansprüche 1 bis 6, wobei der Wulstschutzgummi (20) einen komplexen Elastizitätsmodul E* von 12 MPa oder weniger aufweist,
wobei der komplexe Elastizitätsmodul E* ein Wert ist, der unter Verwendung eines viskoelastischen Spektrometers, das von Iwamoto Quartz GlassLab Co., Ltd. erhältlich ist, gemäß den Bestimmungen von JIS-K6394 unter den folgenden Bedingungen gemessen wird:
Anfangsdehnung: 10 %
Amplitude: ±2
Frequenz: 10 Hz
Verformungsmodus: Zug
Messtemperatur: 70 Grad Celsius.

8. Luftreifen nach einem der Ansprüche 1 bis 7,
wobei in einem Reifenmeridianschnitt, der durch eine Reifendrehachse verläuft, und in jedem der Wulstabschnitte,
in einem Abschnitt der Reifeninnenhohlraumfläche (16), der durch den Wulstschutzgummi (20) gebildet ist, eine Kontur zwischen einem Schnittpunkt (25) und der Wulstspitze (4t) in einer Bogenform gebildet ist, und
der Schnittpunkt (25) dort liegt, wo die Reifeninnenhohlraumfläche (16) eine axiale lineare Linie schneidet, die durch eine Querschnittsmitte des Wulstkerns (5) von jedem der Wulstabschnitte verläuft.

9. Luftreifen nach einem der Ansprüche 1 bis 8,
wobei der Wulstschutzgummi (20) umfasst
einen ersten Abschnitt (21), der sich entlang der Reifeninnenhohlraumfläche (16) radial nach außen erstreckt,
einen zweiten Abschnitt (22), der mindestens einen Teil einer Wulstbodenfläche (4b) bildet, um mit einem Felgensitz (18s) einer Felge (18) in Kontakt zu stehen, wenn der Luftreifen (1) auf die Felge (18) aufgezogen ist, und
einen dritten Abschnitt (23), der sich radial nach außen erstreckt und axial außen von dem Wulstkern (5) jedes Wulstabschnitts angeordnet ist.

10. Luftreifen nach einem der Ansprüche 1 bis 9, der ein Leicht-LKW-Reifen ist.

## Revendications

1. Pneumatique (1) comprenant une paire de portions de talon (4),
dans lequel chaque portion de talon (4) de la paire de portions de talon comprenant un cœur de talon (5) et un caoutchouc de bandelette talon (20) disposé axialement à l'intérieur du cœur de talon (5) et s'étendant vers l'extérieur dans une direction radiale de pneumatique d'un orteil de talon (4t) le long d'une surface de cavité interne de pneumatique (16) et
le caoutchouc de bandelette talon (20) est formé d'une composition de caoutchouc ne contenant pas de matériau fibreux pour le renforcement, dans lequel la second largeur de talon Wb est de 18,0 mm ou moins, dans lequel la seconde largeur de talon (Wb) est une largeur dans la direction axiale de pneumatique de l'orteil de talon (4t) à une surface de côté axialement externe de ladite chaque portion de talon (4),
dans lequel le pneumatique compred en outre un pli de carcasse (6A ou 6B) s'étendant entre la paire de portions de talon (4),
**caractérisé en ce qu'**une distance la plus courte (D2) entre l'orteil de talon (4t) et le pli de carcasse (6A et 6B) est de 6,0 mm ou moins.

2. Pneumatique selon la revendication 1, dans lequel
dans une section médiane de pneumatique passant à travers un axe rotationnel de pneumatique ;
un rapport Wa/Wb d'une première largeur de talon Wa et d'une seconde largeur de talon Wb est de 0,8 à 1,3,
la première largeur de talon Wa est une largeur de talon définie sur une ligne de direction axiale de pneumatique passant à travers un centre transversal du cœur de talon (5).

3. Pneumatique selon la revendication 2, dans lequel le rapport Wa/Wb est plus grand que 1.

4. Pneumatique selon la revendication 1, dans lequel la seconde largeur de talon Wb est de 17,0 mm ou moins.

5. Pneumatique selon l'une quelconque des revendications 1 à 4,
dans lequel chaque portion de talon (4) de la paire de portions de talon a une surface de partie inférieure de talon (4b) avec un siège de jante (18s) d'une jante (18), lorsque le pneumatique (1) est monté sur la jante (18), sur un côté radialement interne du cœur de talon (5) de ladite chaque portion de talon (4),
ledit cœur de talon (5) a une surface interne de cœur de talon (5i) faisant face vers le siège de jante (18s) lorsque le pneumatique (1) est monté sur la jante (18), et
une distance la plus courte entre une position centrale dans la direction axiale de pneumatique de la surface interne du cœur de talon (5i) et la surface de partie inférieure de talon (4b) est de 3,5 mm ou plus.

6. Pneumatique selon l'une quelconque des revendications 1 à 5, dans lequel le caoutchouc de bandelette talon a une élongation à la rupture de 260 % ou moins,
dans lequel l'élongation à la rupture est mesurée selon « caoutchoucs vulcanisés et thermoplastiques - détermination de propriétés de traction » dans la norme industrielle japonaise JIS K6251.

7. Pneumatique selon l'une quelconque des revendications 1 à 6, dans lequel le caoutchouc de bandelette talon (20) a un module élastique complexe E* de 12 MPa ou moins,
dans lequel le module élastique complexe E* est une valeur mesurée en utilisant un spectromètre viscoélastique disponible chez lwamoro Quartz GlassLab Co., Ltd, sous les conditions suivantes en accord avec les conditions de la norme JIS-K6394 :
contrainte initiale : 10 %
amplitude ± 2
fréquence : 10Hz
mode de déformation : traction
température de mesure : 70 degrés Celsius.

8. Pneumatique selon l'une quelconque des revendications 1 à 7, dans lequel, dans une section médiane de pneumatique passant à travers un axe rotationnel de pneumatique et dans chacune des portions de talon, dans une portion de la surface de cavité interne de pneumatique (16) formée par le caoutchouc de bandelette talon, un contour entre un point d'intersection (25) et l'orteil de talon (4t) est formé dans une forme d'arc et le point d'intersection (25) est où la surface de cavité interne de pneumatique (16) est en intersection avec une ligne linéaire axiale passant à travers un centre transversal du cœur de talon (5) desdites chacune des portions de talon.

9. Pneumatique selon l'une quelconque des revendications 1 à 8, dans lequel le caoutchouc de bandelette talon (20) comporte une première portion (21) s'étendant radialement vers l'extérieur le long de la surface de cavité interne de pneumatique (16),
une deuxième portion (22) formant au moins une partie d'une surface de partie inférieure de talon (4b) pour être en contact avec un siège de jante (18s) d'une jante (18) lorsque le pneumatique (1) est monté sur la jante (18), et
une troisième portion (23) s'étendant radialement à l'extérieur et disposée axialement à l'extérieur du cœur de talon (5) de ladite chaque portion de talon.

10. Pneumatique selon l'une quelconque des revendications 1 à 9 étant un pneumatique de camion léger.
